# EUROPÄISCHE PATENTSCHRIFT

(11) **EP 1 097 295 B1**
(45) Veröffentlichungstag und Bekanntmachung des Hinweises auf die Patenterteilung: **27.11.2002**
(21) Anmeldenummer: 99961978.6
(22) Anmeldetag: 15.07.1999
(51) Int. Cl.: F01L 9/04

(54) **ELEKTRONISCHE EINRICHTUNG DER STEUERUNG VON GASWECHSELVENTILEN EINES VERBRENNUNGSMOTORS MIT VARIABLER ÖFFNUNGSFUNKTION**
ELECTRONIC DEVICE FOR CONTROLLING GAS EXCHANGE VALVES OF AN INTERNAL COMBUSTION ENGINE WITH VARIABLE OPENING FUNCTIONS
DISPOSITIF ELECTRONIQUE POUR LA COMMANDE DE SOUPAPES DE COMMUTATION DES GAZ D'UN MOTEUR A COMBUSTION INTERNE A FONCTION D'OUVERTURE VARIABLE

(30) Priorität: 15.07.1998 DE 19831655
(43) Veröffentlichungstag der Anmeldung: 09.05.2001
(73) Patentinhaber: ROBERT BOSCH GMBH, 70442 Stuttgart (DE)
(72) Erfinder: DENZ, Helmut, D-70184 Stuttgart (DE)
(86) Internationale Anmeldenummer: DE9902161
(87) Internationale Veröffentlichungsnummer: WO00004280

(56) Entgegenhaltungen:
- EP-A- 0 376 716
- WO-A-91/08384
- WO-A-92/02712
- DE-A- 4 038 346
- US-A- 5 644 073

## Beschreibung

### Stand der Technik

Die Erfindung betrifft eine variable Steuerung des Gaswechsels bei Verbrennungsmotoren. Der Begriff Gaswechsel bezeichnet den periodischen Wechsel der Zylinderfüllung, d.h. das Ausstoßen von Abgas und das Einströmen von Kraftstoff-Luftgemisch. Bei herkömmlichen Verbrennungsmotoren erfolgt die Gaswechselsteuerung über federbelastete Ventile, die von einer Nockenwelle geöffnet werden. Die Öffnungsfunktion als zeitlicher Verlauf der Ventilöffnung, d.h. Beginn, Dauer und Ausmaß des Öffnungsquerschnitts, wird von der Form der Nockenwelle bestimmt. Die Öffnungsfunktion ist daher bei herkömmlichen Verbrennungsmotoren durch die Formgebung der Nockenwelle sehr genau festlegbar, aber nicht variabel. Bekannt sind weiterhin Systeme zur Gaswechselsteuerung mit variabler Öffnungsfunktion. Die WO 91/08384 zeigt elektromagnetisch gesteuerte und hydraulisch betätigte Ventile mit variabler Öffnungsfunktion. Zur Eliminierung der Effekte von Toleranzen und Alterungserscheinungen in der Ventilbetätigung wird der Ventilhub durch einen Ventilhubsensor erfaßt und der erfaßte Wert wird bei der Ansteuerung des Ventils berücksichtigt. Problematisch ist dabei die Zuordnung des Signals des Ventilhubsensors zum tatsächlichen Ventilhub. Beispielsweise können im Sensorsignal Offsets auftreten, die eine korrekte Zuordnung erschweren. Zur Abhilfe wird der Ventilhubsensor nach der WO 91/08384 nach jedem Schließvorgang kalibriert. Dazu wird das Ventilhubsensorsignal bei fehlendem Ventilöffnungssignal willkürlich zu Null gesetzt. Diese Kalibrierung ist dann richtig, wenn das Ventil tatsächlich geschlossen ist, was bei intakter Betätigung und fehlendem Öffnungssignal zutrifft. In Fällen, in denen das Ventil fehlerhafterweise nicht schließt, führt diese Kalibrierung jedoch zu einer falschen Nullpunkteinstellung des Ventilhubsensors.

Die DE 195 01 386 zeigt eine variable Ventilsteuerung, bei der die Öffnungsfunktion der Gaswechselventile von einer Öffnungsnockenwelle und einer Schließnockenwelle bestimmt wird. Über eine Veränderung der Phasenverschiebung zwischen den mit gleicher Drehfrequenz rotierenden Wellen kann die Öffnungsfunktion in weiten Grenzen variiert werden. Die Phasenverschiebung wird über ein Koppelgetriebe verändert. Bei diesem System kann ein Winkelgeber in der Ventilbetätigungsmechanik die tatsächliche Bewegung der Ventile bzw. der Ventilbetätigungselemente erfassen.

Hier besteht das Problem, die Stellung des Winkelgebers der Stellung der sich öffnenden Einlaßventile zuzuordnen.

Die US 5,644,073 A beschreibt die Überwachung der variablen Ventilsteuerung eines Verbrennungsmotors. Diese Überwachung wird unter besonderen Drosselklappenbedingungen durchgeführt und basiert auf die angesaugte Luftmenge.

Die Aufgabe der Erfindung besteht in der Darstellung einer Einrichtung, die eine eindeutige Zuordnung zwischen dem Beginn der Öffnung der Einlaßventile und dem Signal eines Ventilhubsensors oder Winkelgebers liefert. Diese Aufgabe wird mit den Merkmalen des Anspruchs 1 gelöst. Vorteilhafte Weiterbildungen sind Gegenstand der abhängigen Ansprüche.

Im einzelnen erfolgt bei der Steuerung von Gaswechselventilen eines Verbrennungsmotors,
- die variabel ist und die ein vollständiges Geschlossenhalten wenigstens der Einlaßventile ermöglicht,
- die Bildung eines Signals, das die von der Brennkraftmaschine angesaugte Luftmenge angibt
- ein Erfassen eines Maßes für die Ventilstellung,
- eine öffnende Ansteuerung von wenigstens einem Einlaßventil im Schiebebetrieb, ausgehend von vollständigem Geschlossenhalten der Einlaßventile,
- ein Erfassen des Maßes der erfaßten Ventilstellung, bei der eine Reaktion des Signals über die Luftmenge auftritt und ein Nutzen dieses Maßes als Bezugspunkt zur Bestimmung der tatsächlichen Ventilstellung.

Die Erfindung ermöglicht damit eine eindeutige Zuordnung des Signals eines Ventilhubsensors zu der tatsächlichen Stellung der sich öffnenden Einlaßventile. Ermöglicht wird dies durch einen Vergleich des Signals des Luftmassenmessers mit dem Signal des Ventilhubsensors. Solange der Luftmassenmesser einen Luftmassenstrom ungleich Null anzeigt, ist eine Ventilerhebung gegeben. Im Schiebebetrieb, in dem kein Motordrehmoment benötigt wird, können die Einlaßventile völlig geschlossen werden, so daß der Motor keinerlei Frischluft ansaugt und der Luftmassenmesser den Wert Null anzeigt. Durch eine Testfunktion kann nun bei ausreichend langem Schiebebetrieb das Öffnungssignal des Einlaßventils ausgehend vom Wert Null sukzessiv in Richtung Einlaßventilöffnung vergrößert werden. Bei einem Öffnungssignal, bei dem erstmalig ein Übergang vom Luftmassensignal konstant gleich Null zu einem pulsierenden sehr geringen Luftmassenstrom auftritt, liegt der Beginn der Ventilerhebung. Auf das bei diesem Ereignis auftretende Signal des Ventilhubsensors können sich alle weiteren Ventilhubsensorsignale beziehen.

Damit ermöglicht die Erfindung eine automatische Kalibrierung eines Ventilhubsensors oder eines Winkelgebers in der Ventilbetätigungsmechanik. Damit entfällt die Notwendigkeit einer aufwendigen Justierung des Sensors bzw. Winkelgebers bei der Montage. Außerdem vermindert die automatische Kalibrierung die Anforderungen an die Toleranzen der Sensoren.

Bei einem Ausführungsbeispiel erfolgt die Bildung eines Signals, das die von der von der Brennkraftmaschine angesaugte Luftmenge angibt so, daß das Signal eines Luftmassenmessers über einen Kurbelwellenwinkelbereich b um die beginnende Ventilerhebung gemittelt wird, der kleiner ist als der Abstand zwischen zwei aufeinanderfolgenden Zündungen in der Brennkraftmaschine.

Dies führt zu dem Vorteil einer gesteigerten Meßgenauigkeit der erfindungsgemäßen Lehre. Diese Vorgehensweise ist besonders vorteilhaft bei drosselfreier Füllungssteuerung über die Einlaßventile (ohne Drosselklappe) zu erzielen.

Die gesteigerte Empfindlichkeit erlaubt weiterhin eine Erkennung schon kleinerer Pulsationen und auch eine Erkennung von zylinderspezifischen Unterschieden im Beginn der Ventilerhebung.

Von besonderem Vorteil ist weiterhin die Möglichkeit der Diagnose der Einlaßventile auf dichtes Schließen. Dies erlaubt bereits die Detektion beginnender Undichtheiten, wie sie bspw. durch zu geringes Ventilspiel verursacht sein können. Eine Anzeige und oder Abspeicherung dieses Fehlers erlaubt eine frühzeitige Korrektur des Ventilspiels, entweder durch einen automatischen Eingriff der elektronischen Ventilsteuerung oder durch einen Werkstattbesuch. Kostspielige Schäden durch Verbrennen der Ventile infolge mangelnder Wärmeableitung über den Ventilsitz können so vermieden werden.

Weitere Vorteile ergeben sich aus der folgenden Beschreibung von Ausführungsbeispielen der Erfindung mit Bezug auf die Figuren.

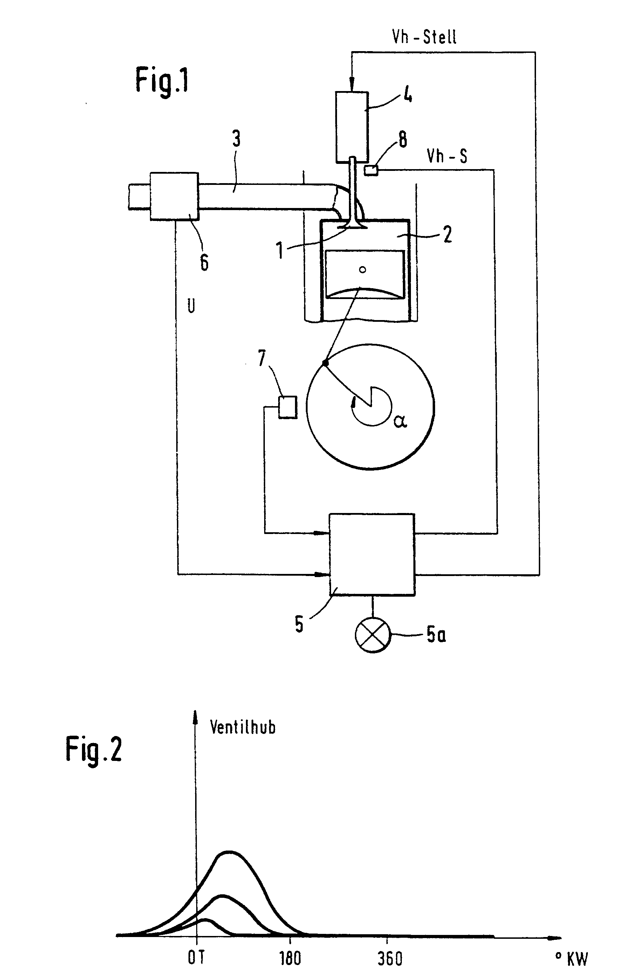

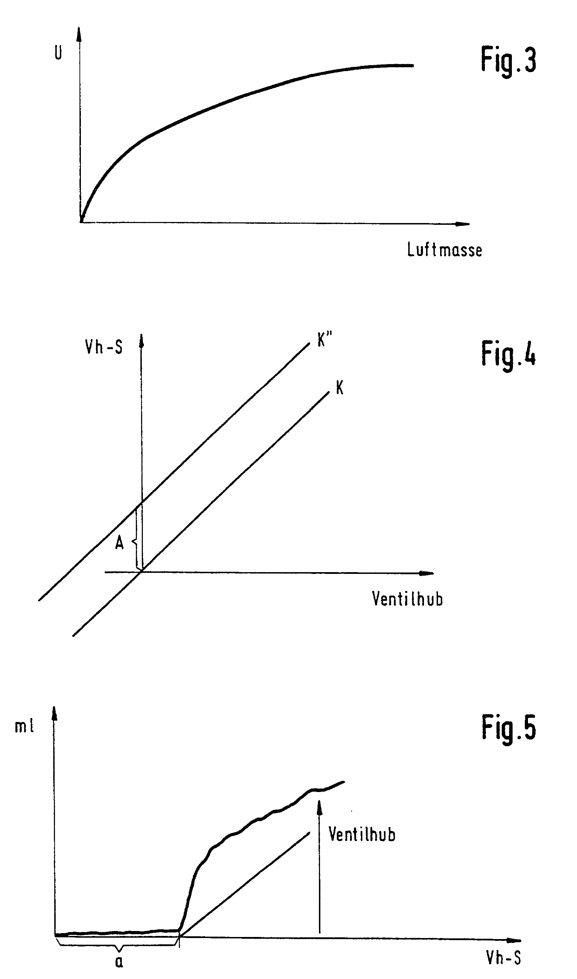

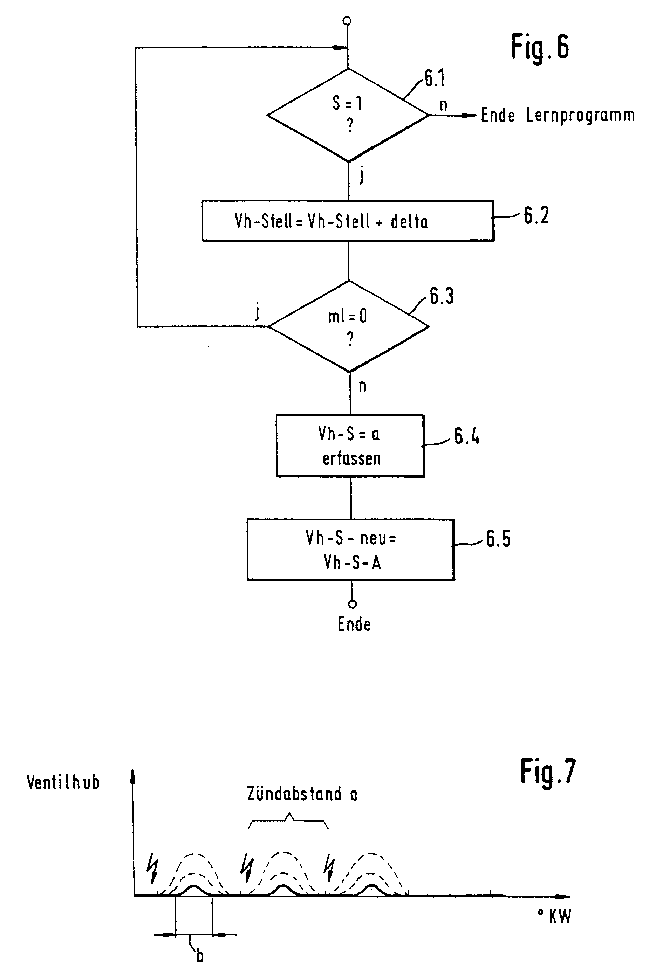

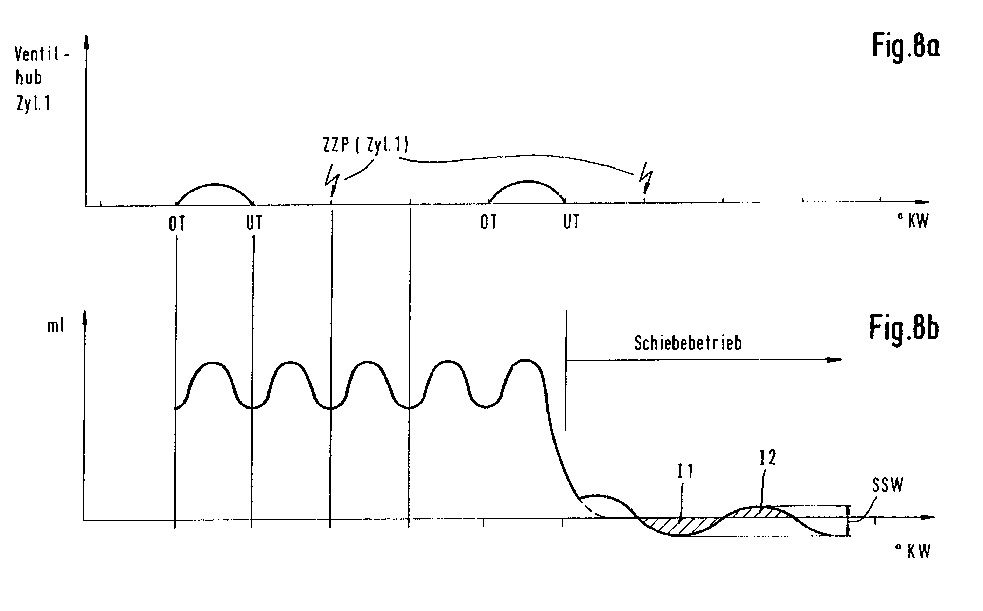

Figur 1 stellt das technische Umfeld der Erfindung dar. Figur 2 zeigt eine Schar von Ventilerhebungskurven. Figur 3 zeigt die Kennlinie, bzw. das Signal eines Luftmassenmessers und Figur 4 stellt eine Kennlinienschar eines Ventilhubsensors dar, wie sie bei leicht variierender Einbaulage des Sensors auftreten kann. Eine variierende Einbaulage kann bspw. durch Streuungen und Toleranzen in der Montage auftreten. Figur 5 verdeutlicht die Funktion der Erfindung anhand einer parallelen Darstellung des verarbeiteten Luftmassenmessersignals ml = f(U) und des Ventilhubsignals über dem Ventilöffnungssignal bei der sukzessiven Vergrößerung des Öffnungssignals. Figur 6 stellt ein Flußdiagramm als Ausführungsbeispiel des erfindungsgemäßen Verfahrens dar. Fig. 7 zeigt Verläufe von U über dem Drehwinkel °KW der Kurbelwelle für verschiedene Ventilerhebungskurven. Die Fig. 8 verdeutlicht eine Korrelation zwischen der Ventilerhebung und dem Luftmassensignal bei einem undichten Einlaßventil.

Die 1 in der Figur 1 bezeichnet das Einlaßventil eines Verbrennungsmotors, das dessen Brennraum 2 mit einem Einlaßkanal 3 gesteuert verbinden oder trennen kann. Die Ventilbetätigung erfolgt über ein Stellglied 4, das seine Betätigungskraft beispielsweise hydraulisch oder elektromagnetisch aufbringt und das über eine elektronische Steuereinrichtung 5 gesteuert wird. Als Eingangssignal werden der Steuereinrichtung 5 wenigstens ein Signal U von einem Luftmassenmesser 6, ein Signal α über die Winkelposition der Kurbelwelle von einem Winkelsensor 7 sowie ein Signal Vh-S von einem Ventilhubsensor 8 zugeführt. Stellt das Mittel 5 bei geschlossenen Einlaßventilen Pulsationen im Luftmassensignal fest, erfolgt in einem Ausführungsbeispiel eine Anzeige und/oder Abspeicherung dieses Ereignisses mit dem Mittel 5a, das bspw. als Fehlerlampe realisiert sein kann.

Figur 2 zeigt eine Schar von Ventilerhebungskurven, wie sie von der elektronischen Steuereinrichtung 5 im Zusammenwirken mit dem Stellglied und den Sensorsignalen einstellbar sind. Die Ventilerhebungskurve ergibt sich als Darstellung des Ventilhubes über dem Drehwinkel der Kurbelwelle (°KW). Insbesondere im Schiebebetrieb können die Gaswechselventile und damit insbesondere die Einlaßventile ganz geschlossen bleiben, so daß der Ventilhub konstant gleich Null ist.

Das Signal eines Luftmassenmessers, wie es in Figur 3 über der Luftmasse dargestellt ist, zeigt in diesem Fall den Wert Null an. Im übrigen reagiert das Signal mit großer Steigung auf einen Anstieg der Luftmasse vom Wert Null an und ist daher gut zur Detektion des Einsetzens des Luftstromes bei beginnender Ventilöffnung geeignet.

Figur 4 zeigt eine Schar von Ventilhubsensorsignalkennlinien Vh-S als Funktion des tatsächlichen Ventilhubes, wie sie beispielsweise bei streuender Einbaulage gleicher Sensoren in einer Serienproduktion aufgenommen werden können.

Figur 5 verdeutlicht die erfindungsgemäße Kalibrierung durch die Darstellung des Luftmassensignals ml als Funktion des Ventilhubsignals Vh-S bei zunehmendem Öffnungssignal Vh-Stell. Im Schiebebetrieb wird das Öffnungssignal Vh-Stell von Null an sukzessiv vergrößert. Im dargestellten Fall reagiert das Luftmassensensorsignal zunächst nicht, was ein Verbleiben des Einlaßventils im geschlossenen Zustand anzeigt. Der Anstieg des Ventilhubsignals kann beispielsweise dann auftreten, wenn der Ventilhubsensor nicht direkt am Ventil sondern an einem Übertragungsglied, das mit mechanischem Spiel behaftet ist, angebracht ist. Erst bei Erreichen des Wertes A tritt die dargestellte Reaktion des Luftmassenmessers auf und zeigt damit den Beginn einer Öffnung der Einlaßventile an. Der zugehörige Wert a des Ventilhubsignals wird von der elektronischen Steuereinrichtung 5 erfaßt und dem Beginn der Ventilerhebung zugeordnet. Die in der Fig. 5 dargestellte Reaktion entspricht der Kennlinie K'' in der Fig. 4. Anschließend können bei der weiteren Steuerung der Ventilöffnung im Normalbetrieb des Verbrennungsmotors alle erfaßten Ventilhübe auf den gelernten Nullpunkt der Ventilerhebung bezogen werden. Dem entspricht ein rechnerisches Verschieben der Kennlinie K'' aus Fig. 4 in den Nullpunkt, d.h. in die Lage der Kennlinie K. Der Ablauf des erfindungsgemäßen Verfahrens ist in der Figur 6 dargestellt. In einem Schritt 6.1 wird überprüft, ob Schiebebetrieb vorliegt. Dies sei der Fall, wenn eine variable S den Wert 1 besitzt. Anschließend erfolgt eine sukzessive Erhöhung des Öffnungssignals Vh-Stell um den Wert delta (Schritt 6.2). Daran schließt sich im Schritt 6.3 eine Abfrage des Luftmassensignals an. So lange das Luftmassensignal bei Null bleibt, wird die Schrittfolge 6.1, 6.2 und 6.3 wiederholt durchlaufen und damit das Öffnungssignal Vh-Stell sukzessiv weiter erhöht. In dem Moment, in dem das Luftmassensignal ml von Null abweicht, verzweigt Schritt 6.3 zum Schritt 6.4, in dem das zugehörige Signal des Ventilhubsensors Vh-S erfaßt wird. Dieser Wert wird als A bezeichnet und abgespeichert. Alle weiteren Signale des Ventilhubsensors werden mit diesem abgespeicherten Wert A korrigiert, was im Schritt 6.5 dargestellt wird durch die Gleichung Vh-S_neu = Vh-S minus A.

Das Luftmassensignal wird aus dem vom Mittel 6 gelieferten Spannung gewonnen. Die Spannung U wird typischerweise im 1 ms Raster abgetastet und über einen größeren Kurbelwellenwinkelbereich zu dem Wert ml gemittelt. Der Kurbelwellenwinkelbereich umfaßt bspw. den Abstand zwischen zwei Zündungen, was beim 4-Zylindermotor einem Kurbelwellenwinkelbereich von etwa 180° entspricht. Dagegen entspricht 1 ms bei einer Drehzahl von 1800 Umdrehungen pro Minute einem Winkelbereich von etwa 11°.

Zur Verbesserung der Meßgenauigkeit erfolgt bei einem Ausführungsbeispiel der Erfindung die Bildung des Mittelwerts von U nicht über den gesamten Zündabstand a, sondern nur über einen eingeschränkten Kurbelwellenwinkelbereich b um die beginnende Ventilerhebung. Dies zeigt Fig. 7, die Verläufe von U über dem Drehwinkel °KW der Kurbelwelle für verschiedene Ventilerhebungskurven zeigt.

Die aus der Mittelwertbildung über einen kleineren Bereich resultierende Steigerung der Empfindlichkeit ist insbesondere bei drosselfreier Füllungssteuerung über die Einlaßventilerhebung zu erzielen. Bei drosselfreier Füllungssteuerung ist keine Drosselklappe und somit kein durch eine Drosselklappe räumlich begrenztes Saugvolumen vorhanden, das die Pulsationen dämpft. Dann sind auch sehr kleine Pulsationen nahe dem Wert Null noch im Signal des Luftmassenmessers erkennbar.

Somit ist eine Steigerung der Genauigkeit möglich, indem nicht nur die Veränderung des gemittelten Luftmassenstroms beobachtet wird, sondern für die Adaption des Ventilhubsensorsignals an die tatsächliche Ventilöffnung eine Mittelwertbildung des Luftmassenstroms nur in einem bestimmten Kurbelwellenwinkelbereich erfolgt.

Damit können schon kleinere Pulsationen und auch zylinderspezifische Unterschiede im Pulsationsbeginn und somit in der Ventilerhebung erkannt werden. Dies eröffnet bei einer Ventil-individuellen Eingriffsmöglichkeit auf die Öffnungsfunktion eine entsprechend Ventil-individuelle Korrekturmöglichkeit. Bei einer Steuerung der Öffnungsfunktionen mehrerer Ventile über ein Koppelgetriebe ist eine Anzeige für den Kundendienst denkbar, die eine Information zur Ventilspieleinstellung liefert.

Eine weitere Möglichkeit besteht in der Diagnose undichter Einlaßventile. Dazu kann überwacht werden, ob bei vollständig inaktiver Ansteuerung der Einlaßventile eine saugsynchrone Pulsation auf dem Luftmassensignal erkennbar ist. Insbesondere bei einem Heißfilmluftmassenmesser mit Rückströmerkennung ist hier ein Unterschied zwischen dem hin und rückströmenden Leckluftmassenstrom durch das nicht vollständig abdichtende Ventil detektierbar. Dies ist in der Fig. 8 dargestellt. Ein Luftmassenmesser mit Rückströmerkennung ist bspw. aus der US 4 468 983 bekannt, bei der die räumliche Anordnung von Meßwiderständen neben der Detektion des Betrages des Luftmassenstroms auch eine Richtungsunterscheidung erlaubt.

Fig. 8 a zeigt Ventilerhebungskurven für den Zylinder 1 eines 4 Zylinder-4-Taktmotors über dem Kurbelwellenwinkel °KW. Die Ventilerhebungskurven der übrigen Zylinder sind aus Gründen der Übersichtlichkeit nicht dargestellt. Im rechten Teil der Fig. 8 a soll keine Ventilöffnung stattfinden, bspw. weil sich der Motor im Schiebebetrieb befindet.

Fig. 8 b zeigt den zugehörigen Verlauf des Luftmassenmessersignals U für den Fall eines undichten Ventils. Der Signalverlauf im linken Teil der Fig. 8 b ergibt sich durch Überlagerung der Ventilerhebungen aller Zylinder. Insbesondere das erste dargestellte Maximum ergibt sich durch den Ansaugtakt des ersten Zylinders. Im rechten Teil der Fig. 8 sollte das Luftmassenmessersignal U konstant gleich Null sein, da hier Schiebebetrieb mit geschlossenen Ventilen vorliegen soll.

Die im rechten Teil der Fig. 8 b dargestellte Restschwingung zeigt ein nicht dicht schließendes Einlaßventil im Zylinder 1 an. Die erste negative Halbwelle im rechten Teil der Fig. 8b tritt, wie ein Blick auf Fig. 8 a zeigt, nach dem Einlaßtakt (Ladungswechsel-Unterer Totpunkt) und damit im Verdichtungstakt auf. Bei undichtem Einlaßventil wird ein Teil der Zylinderfüllung in das Saugrohr geschoben und vom Luftmassenmesser als Rückströmung (negatives Vorzeichen) registriert. Im anschließenden Arbeitstakt saugt der Kolben über das undichte Einlaßventil Gas aus dem Saugrohr an, was vom Luftmassenmesser mit positivem Vorzeichen registriert wird. Durch Auswertung dieses charakteristischen Druckverlaufs sind undichte Einlaßventile zu detektieren. Bspw. kann das Betragsintegral (bspw. Summe der Flächen Il und I2) oder der Spitze-Spitze-Wert (SSW) der Schwingung mit einem vorbestimmten Schwellwert verglichen werden. Bei Überschreitung kann eine Fehlermeldung als Kundendienstinformation abgelegt werden, die dem Fahrer auch angezeigt werden kann. Dadurch können beginnende Undichtheiten frühzeitig erkannt werden, bevor es zu größeren Motorschäden durch verbrannte Ventile kommt.

## Patentansprüche

1. Elektronische Einrichtung der Steuerung von Gaswechselventilen einer Brennkraftmaschine,
- die variabel ist und die ein vollständiges Geschlossenhalten wenigstens der Einlaßventile (1) ermöglicht,
- mit Mitteln (6) zur Bildung eines Signals (U), das die von der Brennkraftmaschine angesaugte Luftmenge angibt
- mit Mitteln (8) zur Erfassung eines Maßes (Vh-S) für die Ventilstellung,
**dadurch gekennzeichnet, daß** die elektronische steuereinrichtung (5) die Einlaßventile (1) im Schiebebetrieb ausgehend von vollständigem Geschlossenhalten der Einlaßventile (1) öffnend ansteuert
und daß das Maß (Vh-S) der erfaßten Ventilstellung,
bei der eine Reaktion des Signals (U) über die Luftmenge auftritt,
als Bezugspunkt zur Bestimmung der
tatsächlichen Ventilstellung genutzt wird.

2. Elektronische Steuereinrichtung nach Anspruch 1, **dadurch gekennzeichnet, daß** die Mittel (6) zur Bildung eines Signals (U), das die von der von der Brennkraftmaschine angesaugte Luftmenge angibt, einen Luftmassenmesser (6) umfassen, dessen Signal (U) über einen Kurbelwellenwinkelbereich b um die beginnende Ventilerhebung gemittelt wird, der kleiner ist als der Abstand zwischen zwei aufeinanderfolgenden Zündungen in der Brennkraftmaschine.

3. Elektronische Einrichtung der Steuerung von Einlaßventilen eines Verbrennungsmotors,
- die variabel ist und die ein vollständiges Geschlossenhalten der Einlaßventile (1) ermöglicht,
- mit Mitteln (6) zur Bildung eines Signals (U) über die von der Brennkraftmaschine angesaugte Luftmenge,
**dadurch gekennzeichnet, daß** die elektronische
Steuereinrichtung (5) die Einlaßventile (1) im Schiebebetrieb geschlossen hält und parallel dazu prüft, ob das Signal (U) über die Luftmenge, die von der Brennkraftmaschine angesaugt wird, Pulsationen aufweist, die ein vorbestimmtes Ausmaß überschreiten und daß die elektronische Steuereinrichtung (5) ein Überschreiten als undichtes Einlaßventil (1) wertet.

4. Elektronische Einrichtung nach Anspruch 3, **dadurch gekennzeichnet, daß** die Mittel (6) zur Erfassung der von der Brennkraftmaschine angesaugten Luftmenge einen Luftmassenmesser (6) mit Rückströmerkennung umfassen.

5. Elektronische Einrichtung nach Anspruch 4, **dadurch gekennzeichnet, daß** das Betragsintegral oder der Spitze-Spitze-Wert des Signals (U) über die von der Brennkraftmaschine angesaugte Luftmenge ein vorbestimmtes Ausmaß überschreitet.

6. Elektronische Steuereinrichtung nach Anspruch 3, 4, oder 5, **dadurch gekennzeichnet, daß** ein Überschreiten als Fehlermeldung angezeigt und/oder abgespeichert wird.

7. Verfahren der Steuerung von Gaswechselventilen eines Verbrennungsmotors bei einer variablen Ventilsteuerung, die ein vollständiges Geschlossenhalten wenigstens der Einlaßventile (1) ermöglicht,
mit den Schritten:
- Bildung eines signals (U), das die von der Brennkraftmaschine angesaugte Luftmenge angibt
- Erfassen eines Maßes (Vh-S) für die Ventilstellung,
**gekennzeichnet durch** die weiteren Schritte:
- Öffnende Ansteuerung wenigstens eines Einlaßventils (1) im Schiebebetrieb ausgehend von vollständigem Geschlossenhalten der Einlaßventile (1)
- Erfassen des Maßes (Vh-S) der erfaßten Ventilstellung,
bei der eine Reaktion des Signals (U) über die Luftmenge auftritt und Nutzen dieses Maßes als Bezugspunkt zur Bestimmung der tatsächlichen Ventilstellung.

8. Verfahren nach Anspruch 7, **dadurch gekennzeichnet, daß**
zur Bildung eines Signals (U), das die von der von der Brennkraftmaschine angesaugte Luftmenge angibt, das Signal (U) eines Luftmassenmessers (6) über einen Kurbelwellenwinkelbereich b um die beginnende Ventilerhebung gemittelt wird, der kleiner ist als der Abstand zwischen zwei aufeinanderfolgenden Zündungen in der Brennkraftmaschine.

9. Verfahren der Steuerung von Einlaßventilen eines Verbrennungsmotors bei einer variablen Ventilsteuerung, die ein vollständiges Geschlossenhalten der Einlaßventile (1) ermöglicht, mit den Schritten:
- Bilden eines Signals (U) über die von der Brennkraftmaschine angesaugte Luftmenge,
**gekennzeichnet durch** die weiteren Schritte
- parallel zum Geschlossenhalten der Einlaßventile (1) im Schiebebetrieb erfolgendes Überprüfen des Signals (U) über die Luftmenge, die von der Brennkraftmaschine angesaugt wird auf Pulsationen, die ein vorbestimmtes Ausmaß überschreiten
- Werten eines Überschreitens als Zeichen für wenigstens ein undichtes Einlaßventil (1).

10. Verfahren nach Anspruch 9, **dadurch gekennzeichnet, daß** ein Überschreiten als Fehlermeldung angezeigt und/oder abgespeichert wird.

## Claims

1. Electronic device for controlling gas exchange valves of an internal combustion engine,
- which is variable and which permits at least the inlet valves (1) to be held completely closed,
- having means (6) for forming a signal (U) which indicates the quantity of air taken in by the internal combustion engine,
- having means (8) for sensing a measure (Vh-S) of the valve setting,
**characterized in that** the electronic control device (5) actuates the inlet valves (1) so that they open during overrun conditions starting from a state in which the inlet valves (1) are held completely closed,
and **in that** the measure (Vh-S) of the sensed valve setting at which a reaction of the signal (U) relating to the quantity of air occurs is used as a reference point for determining the actual valve setting.

2. Electronic control device according to Claim 1, **characterized in that** the means (6) for forming a signal (U) which indicates the quantity of air taken in by the internal combustion engine comprise an air mass flow rate meter (6) whose signal (U) is averaged over a crank shaft angle range b around the incipient lifting-off of the valve which is smaller than the distance between two successive ignitions in the internal combustion engine.

3. Electronic device for controlling inlet valves of an internal combustion engine,
- which is variable and which permits the inlet valves (1) to be held completely closed,
- having means (6) for forming a signal (U) relating to the quantity of air taken in by the internal combustion engine, **characterized in that** the electronic control device (5) holds the inlet valves (1) closed during overrun conditions and in parallel with this checks whether the signal (U) relating to the quantity of air which is taken in by the internal combustion engine has pulsations which exceed a predetermined value, and **in that** if they do exceed it, the electronic control device (5) evaluates this as a leaking inlet valve (1).

4. Electronic device according to Claim 3, **characterized in that** the means (6) for sensing the quantity of air taken in by the internal combustion engine comprise an air mass flow rate meter (6) with reverse flow detection.

5. Electronic device according to Claim 4, **characterized in that** the absolute-value integral or the peak-to-peak value of the signal (U) relating to the quantity of air taken in by the internal combustion engine exceeds a predetermined value.

6. Electronic control device according to Claim 3, 4 or 5, **characterized in that** the value being exceeded is stored and/or displayed as a fault message.

7. Method for controlling gas exchange valves of an internal combustion engine with variable valve control which permits at least the inlet valves (1) to be held completely closed, having the steps:
- formation of a signal (U) which indicates the quantity of air taken in by the internal combustion engine,
- sensing of a measure (Vh-S) of the valve setting, **characterized by** the further steps:
- actuation of at least one inlet valve (1) so that it opens during overrun conditions starting from a state in which the inlet valves (1) are held completely closed,
- sensing of the measure (Vh-S) of the sensed valve setting at which a reaction of the signal (U) relating to the quantity of air occurs and use of this measure as a reference point for determining the actual valve setting.

8. Method according to Claim 7, **characterized in that**, in order to form a signal (U) which indicates the quantity of air taken in by the internal combustion engine, the signal (U) of an air mass flow rate meter (6) is averaged over a crank shaft angle range b about the incipient lifting-off of the valve which is smaller than the distance between two successive ignitions in the internal combustion engine.

9. Method for controlling inlet valves of an internal combustion engine with variable valve control which permits the inlet valves (1) to be held completely closed, having the steps:
- formation of a signal (U) relating to the quantity of air taken in by the internal combustion engine,
**characterized by** the further steps
- checking of the signal (U) relating to the quantity of air which is taken in by the internal combustion engine for pulsations which exceed a predetermined value, said checking taking place in parallel with the state in which the inlet valves (1) are held closed during overrun conditions,
- evaluation of the value being exceeded as an indication of at least one leaking inlet valve (1).

10. Method according to Claim 9, **characterized in that** the value being exceeded is stored and/or displayed as a fault message.

## Revendications

1. Installation électronique de commande de soupape d'échange de gaz d'un moteur à combustion interne,
cette installation étant variable et permettant de maintenir complètement fermées au moins les soupapes d'admission (1), avec
- des moyens (6) pour former un signal (U) indiquant la quantité d'air aspiré par le moteur à combustion interne, et
- des moyens (8) pour détecter une mesure (Vh-S) de la position d'une soupape,
**caractérisée en ce que**
l'installation de commande électronique (5) commande les soupapes d'admission (1) en partant du mode de poussée, correspondant au maintien complètement fermé des soupapes d'admission (1) jusqu'à l'ouverture, et
la mesure (Vh-S) de la position détectée des soupapes pour laquelle on a une réaction du signal (U) en fonction de la quantité d'air, est utilisée comme point de référence pour déterminer la position effective des soupapes.

2. Installation de commande électronique selon la revendication 1,
**caractérisée en ce que**
les moyens (6) pour former un signal (U) indiquant la quantité d'air aspiré par le moteur à combustion interne comprennent un débitmètre massique d'air (6) fournissant un signal (U) dont on fait une moyenne dans une plage d'angles de vilebrequin (b) autour du début du soulèvement de la soupape, cette plage étant inférieure à l'intervalle compris entre deux allumages successifs du moteur à combustion interne.

3. Installation de commande électronique des soupapes d'admission d'un moteur à combustion interne,
- cette installation étant variable et permettant de maintenir complètement fermées les soupapes d'admission (1), avec
- des moyens (6) pour former un signal (U) correspondant à la quantité d'air aspiré par le moteur à combustion interne,
**caractérisée en ce que**
l'installation de commande électronique (5) maintient fermées les soupapes d'admission (1) en mode de poussée et vérifie en parallèle à cela si le signal (U) de la quantité d'air aspiré par le moteur à combustion interne présente des pulsations dépassant un seuil prédéterminé et en cas de dépassement, l'installation de commande électronique (5) évalue la situation comme correspondant à une soupape d'admission (1) non étanche.

4. Installation de commande électronique selon la revendication 3,
**caractérisée en ce que**
les moyens (6) de saisie de la quantité d'air aspiré par le moteur à combustion interne comprennent un débitmètre massique d'air avec détection du flux de retour.

5. Installation de commande électronique selon la revendication 4,
**caractérisée en ce que**
l'intégrale de l'amplitude ou la valeur de maximum à maximum du signal (U) de la quantité d'air aspiré par le moteur à combustion interne dépasse un seuil prédéterminé.

6. Installation de commande électronique selon l'une quelconque des revendications 3, 4, 5,
**caractérisée en ce qu'**
un dépassement est affiché et/ou enregistré comme signal de défaut.

7. Procédé de commande des soupapes d'échange de gaz d'un moteur à combustion interne avec une commande variable des soupapes permettant de maintenir totalement fermées au moins les soupapes d'admission (1) et comprenant les étapes suivantes :
- on forme un signal (U) indiquant la quantité d'air aspiré par le moteur à combustion interne,
- on saisit une mesure (Vh-S) de la position des soupapes,
procédé **caractérisé par** les étapes suivantes :
- on commande l'ouverture d'au moins une soupape d'admission (1) en mode de poussée à partir du maintien complètement fermé des soupapes d'admission (1),
- on saisit la mesure (Vh-S) de la position de soupape ainsi détectée pour laquelle se produit une réaction du signal (U) en fonction de la quantité d'air et on utilise cette mesure comme point de référence pour déterminer la position effective des soupapes.

8. Procédé selon la revendication 7,
**caractérisé en ce que**
pour former un signal (U) indiquant la quantité d'air aspiré par le moteur à combustion interne, on fait la moyenne du signal (U) fourni par le débitmètre massique d'air (6) dans une plage d'angles de vilebrequin (b) entourant le début du soulèvement de la soupape, cette plage étant inférieure à l'intervalle entre deux allumages successifs du moteur à combustion interne.

9. Procédé de commande des soupapes d'admission d'un moteur à combustion interne avec commande variable des soupapes permettant de maintenir complètement fermées les soupapes d'admission (1), comprenant les étapes suivantes :
- on forme un signal (U) pour la quantité d'air aspiré par le moteur à combustion interne,
**caractérisé par** les étapes suivantes :
- en parallèle on maintient fermées des soupapes d'admission (1) en mode de poussée, on vérifie le signal (U) de la quantité d'air aspiré par le moteur à combustion interne pour en détecter les pulsations qui dépassent un seuil prédéterminé,
- on exploite ce dépassement comme étant un signe indiquant qu'au moins une soupape d'admission (1) présente un défaut d'étanchéité.

10. Procédé selon la revendication 9,
**caractérisé en ce qu'**
on affiche et/ou enregistre un dépassement comme signal de défaut.
